# EUROPÄISCHE PATENTSCHRIFT

(11) **EP 2 217 106 B1**
(45) Veröffentlichungstag und Bekanntmachung des Hinweises auf die Patenterteilung: **26.11.2014**
(21) Anmeldenummer: 08857329.0
(22) Anmeldetag: 26.11.2008
(51) Int. Cl.: A46D 1/00, A46B 3/00, A46D 1/04, B29C 45/26, B29L 31/42

(54) **HAARBÜRSTE, BORSTE UND VERFAHREN ZU DEREN HERSTELLUNG**
HAIRBRUSH, BRISTLE, AND METHOD FOR THE PRODUCTION THEREOF
BROSSE À CHEVEUX, SOIES ET LEUR PROCÉDÉ DE FABRICATION

(30) Priorität: 06.12.2007 DE 102007059015
(43) Veröffentlichungstag der Anmeldung: 18.08.2010
(73) Patentinhaber: Braun GmbH, 61476 Kronberg/Taunus (DE)
(72) Erfinder: HONNEFELLER, Katja, 61381 Friedrichsdorf (DE); SENG, Jürgen, 65779 Kelkheim (DE); KLÖPPEL-RIECH, Michael, 61169 Friedberg (DE)
(74) Vertreter: Zetterer, Gerd
(86) Internationale Anmeldenummer: PCT/EP2008/009994
(87) Internationale Veröffentlichungsnummer: WO 2009/071224

(56) Entgegenhaltungen:
- EP-A- 1 491 113
- CH-A- 311 149
- FR-A- 958 327
- FR-A- 969 087
- GB-A- 622 532
- US-A- 2 621 369
- US-A- 3 781 402

## Beschreibung

Die Erfindung betrifft Borsten zur Verwendung in einer Haarbürste und Verfahren zur Herstellung solcher Borsten. Die Erfindung kann in einer Vielzahl von ganz verschiedenen Haarbürsten eingesetzt werden. Es kommt sogar in Betracht, daß die hierin beschriebenen Borsten in Bürsten eingesetzt werden, die nicht oder nicht vorwiegend zum Bürsten der Haare eingesetzt werden. Es kommt insbesondere auch in Betracht, daß die Borsten in einer Massagebürste eingesetzt werden. Ebenso kommt ihr Einsatz in einem Haarpflegegerät in Betracht, welches die Haare zusätzlich erwärmt, etwa durch warme Luft oder eine warme Kontaktfläche. Entsprechende Geräte werden als so genannte Styler oder Curler vermarktet.

Die GB 601,371 (Denman) offenbart eine Haarbürste mit nichtmetallischen Borsten. Die Borsten verjüngen sich zur Spitze hin und haben einen Borstenfuß, der ihre feste Verankerung in einer Gummimatte erlaubt, in dem die Borsten mit der Spitze zuerst durch Öffnungen in der Matte geschoben werden, und durch einen entsprechenden Bürstenkörper von der Bürstenseite her Druck auf die Borstenfüße ausgeübt wird.

Ein Verfahren zur Herstellung von Borsten ist aus der DE 2155888 bekannt. Dort wird ein mehrteiliges trennbares Formwerkzeug offenbart, mit dem eine Borste mit Borstenfuß und Borstenschaft geformt werden kann. Das Verfahren erlaubt es zumindest prinzipiell gratfreie Borstenschäfte zu erzeugen, erfordert aber ein aufwendiges Recken und ein komplexes Formwerkzeug. Trotz der Komplexität dieses Formwerkzeuges können jedoch keine frei wählbaren Fußformen für den Borstenfuß hergestellt werden, insbesondere kann kein Borstenfuß mit Hinterschnitt hergestellt werden.

Die Merkmale des Oberbegriffs des Anspruchs 1 sind aus US 2 621 369 A bekannt.

Die vorliegende Erfindung macht sich zur Aufgabe, Borsten und Bürsten sowie Verfahren zu deren Herstellung anzubieten, die gegenüber dem Stand der Technik verbessert sind. Die Borsten und Bürsten sollen besonders schonend auf Haare und Kopfhaut einwirken. Die Herstellungsverfahren sollen zur Massenherstellung geeignet sein, sie sollen kostengünstig sein und wenig Ausschuß hervorbringen. Insbesondere sollen die Verfahren auch bei nicht perfekten Produktionsstandards sichere und schonend zu verwendende Borsten und Bürsten bereitstellen.

Gelöst werden diese Aufgaben durch ein Verfahren zur Herstellung einer Borste nach Anspruch 1. Bevorzugte Ausführungsformen, durch die die Aufgaben besonders gut gelöst werden, sind in den Unteransprüchen beschrieben.

Die Verwendung eines mehrteiligen trennbaren Formwerkzeuges erlaubt es, optimierte Formhohlräume für verschiedene Borstenteile zur Verfügung zu stellen. Der Borstenschaftrohling wird im Formhohlraum eines separaten Formwerkzeuges geformt. Dazu wird formbares Material in das Formwerkzeug eingebracht, welches hierzu in aller Regel gegenüber der Einfüllöffnung für das formbare Material einen Luftaustrittskanal aufweist. Der Formhohlraum wird sich üblicherweise von der Einfüllöffnung weg verjüngen, d. h. der Formhohlraum hat an einer weiter von der Einfüllöffnung entfernten Stelle einen kleineren Querschnitt. Dementsprechend wird der Borstenschaftrohling so geformt werden, daß die künftige Borstenspitze an dem Ende des Formhohlraums entsteht, das der Einfüllöffnung gegenüberliegt.

Die Erfindung ist geeignet für die Formung von Borsten von allen gängigen formbaren Materialien, d. h. allen geeigneten Kunststoffen, und insbesondere Polyamiden. Ein bevorzugtes Material sind aliphatische Polyamide, insbesondere solche die als "Nylon" im Handel erhältlich sind. Solche aliphatische Polyamide sind relativ hitzeunempfindlich, was es erlaubt, die Borsten in einer Haarbürste zu verwenden während das Haar erhitzt wird, etwa durch einen Haartrockner.

Insbesondere für die bevorzugten aliphatischen Polyamide ist jedoch bekannt, daß sie leicht zur Gratbildung neigen, da sie in mehrteiligen Formwerkzeugen besonders gut verlaufen. Würde also der Formhohlraum für den Borstenschaft in einem zwei- oder mehrteiligen Formwerkzeug gebildet, so bliebe beim Entformen ein Grat zurück. Ein solcher Grat am Borstenschaft beschädigt aber das Haar und zudem sammeln sich dort leicht Verschmutzungen. Dies führt zu einer wenig hygienischen, wenig schonenden Haarbürste.

Denkbar wäre die Nachbehandlung eines Borstenschaftes, beispielsweise durch Entgraten. Eine Möglichkeit des Entgratens stellt das Behandeln geformter Borstenschäfte mit Reibmitteln dar. Dieser Arbeitsschritt ist aber zeitaufwendig und teuer und kann auch zu einer vermehrten Rauigkeit an übrigen Stellen des Borstenschaftes führen. Alternativ oder zusätzlich könnte der Borstenschaft zum Zwecke des Entgratens tiefgekühlt werden. Das an sich sehr zähe aliphatische Polyamidmaterial ist durch Tiefkühlen leichter zu entgraten. Dieser Schritt ist aber offensichtlich ebenfalls kostspielig.

Nach dem vorgestellten Verfahren wird der Borstenfuß mit zwei Formbacken geformt, welche zusammen einen Formhohlraum bilden. Dieser Formhohlraum, der von zwei Formbacken gebildet wird, entspricht im Wesentlichen der Form des zu formenden Borstenfußes. Er wird mit dem formbaren Material gefüllt und anschließend werden die beiden Formbacken getrennt.

Der Borstenfuß wird in der Regel aus demselben formbaren Material wie der Borstenschaft gebildet. Die Formhohlräume für Borstenschaft und Borstenfuß bilden dabei einen verbundenen Formhohlraum, der in einem Arbeitsschritt mit einem formbaren Material gefüllt wird. Es ist aber auch die Formung von Borstenschaft und -fuß aus verschiedenem Material denkbar.

Wenn ein dreiteiliges Formwerkzeug verwendet wird, kann zur Entnahme des Borstenschaftes aus seiner Formbacke dieses relativ zu den Formbacken, welche den Borstenfuß halten, entlang der Achse der entstandenen Borste wegbewegt werden. Danach können die beiden Formbacken, die den Borstenfuß halten, getrennt werden. Diese Bewegung der Formbacken ermöglicht eine einfache Entnahme der Borsten ohne zusätzliche Vorrichtungen.

Zusätzlich zum oben beschriebenen Verfahren kommt es auch in Betracht, daß der Borstenschaft gereckt wird. Dann weicht die Endform des Borstenschaftrohlings von der des Formhohlraums ab, in dem der Borstenschaftrohling zunächst geformt wird. Das Recken des Borstenschaftrohlings kann durch eine Relativbewegung der dritten Formbacke zu der ersten und/oder zweiten Formbacke erfolgen, wenn diese Relativbewegung entlang der Richtung der Längsachse des zu erzeugenden Borstenschaftes erfolgt.

Da das Recken kein erforderlicher Verfahrensschritt ist, sind Verfahren, bei denen der Borstenschaft im Wesentlichen dieselbe Form wie der Borstenschaftrohling hat, gleichfalls erfindungsgemäß. Im Rahmen dieser Erfindung können daher Borstenschaft und Borstenschaftrohling, wie auch Borste und Borstenrohling in der Regel austauschbar verwendet werden.

Zu beachten ist, daß Bürsten eine preiswerte regelmäßig neu angeschaffte Ware des täglichen Bedarfs sind. Deshalb soll einen Bürste nicht zu teuer sein. Erst recht muß daher bei der enormen Zahl der zu erzeugenden Borsten auf ein preiswertes Massenherstellungsverfahren geachtet werden. Trennbare Formwerkzeuge, die gemeinsam einen Formhohlraum bilden, hinterlassen regelmäßig einen kleinen Grat entlang der Trennlinie. Bei hochwertigen und neuen Formwerkzeugen ist dieser Grat gering. Gerade in einem preiswerten Massenverfahren ist es aber erforderlich auch preiswerte Formwerkzeuge über einen gewisse Nutzungsdauer einzusetzen. Dies führt zu deutlichen Graten, die die oben beschriebenen Nachteile bei der Benutzung als Haarbürste haben.

Auf der anderen Seite ist die Formung des Borstenschaftes samt Borstenfuß in einem einzigen Formwerkzeug nicht ohne andere Schwierigkeiten. Der Borstenschaft muß sich dann über seine ganze Länge verjüngen und der Borstenfuß muß dies ebenfalls, so daß keine komplexe Borstenform erzeugbar ist. Eine solch simple Borstenform, wie sie auch aus der GB 601,371 (Denman) bekannt ist, führt jedoch zu gewissen zusätzlichen Anforderungen an die Bürste. Denman offenbart einen relativ komplexen Bürstenkörper, in dem die Borsten vollflächig unterstützt werden. Die Borsten können zwar zur Seite hin umknicken, jedoch nicht entlang ihrer Längsachse auf die Bürste zu zurückweichen. Ein solches Zurückweichen der Borsten, also eine federnde Lagerung, ist jedoch wesentlich schonender etwa für die Kopfhaut, wenn die Bürste als Haarbürste eingesetzt wird.

Die federnde Lagerung der Borsten kann erreicht werden wenn der Borstenfuß einen Hinterschnitt hat, mit dem der Borstenfuß sowohl auf der Oberseite als auch auf der Unterseite eines Trägermaterials befestigt werden kann.

Ein solches Trägermaterial kann etwa eine elastische Gummimatte sein, die elastisch vorgespannt im Borstenkörper eingelassen ist. Diese Gummimatte vermittelt dann jeder einzelnen eingelassenen Borste eine Federelastizität. Die Borsten können sowohl entlang ihrer Längsachse zurückweichen (und federelastisch wieder in Richtung Haar gedrückt werden) als auch in jeder axialen Richtung dazu nachgeben. Einen komplexer geformten Borstenfuß gestalten zu können erlaubt daher schonendere Bürsten herzustellen.

Das Verfahren zur Herstellung einer Borste kann auch noch weitere Arbeitsschritte umfassen. Insbesondere kommt es in Betracht, das Profil des Borstenschaftrohlings weiter zu bearbeiten. Eine solche Bearbeitung kann im Färben, Schleifen, Glätten oder Polieren des Borstenschaftrohlings bestehen. Insbesondere kommt auch die Bearbeitung des Borstenschaftrohlings im Bereich seines Kopfes in Frage.

Das hierin offenbarte Verfahren kann einen Schritt der Verrundung des Kopfes des Borstenschaftrohlings umfassen. Unter "Verrunden" wird hierin ein Verfahren verstanden, bei dem der Kopf eine Profil erhält, welches zu einer Verdickung gegenüber dem Schaft unterhalb des Borstenkopfes führt, beispielsweise nimmt dabei der axiale Querschnitt der Borste vom Schaft zum Kopf hin an mindestens einer Stelle zu, möglicherweise nimmt der axiale Querschnitt dabei zunächst an mindestens einer Stelle zu und hernach an mindestens einer Stelle wieder ab. Eine kugelförmige oder zumindest rundliche Kopfform ist gut geeignet.

Der Borstenkopf kann mechanisch oder kontaktfrei verrundet werden, muß aber in der Regel dazu erhitzt werden. Zum Erhitzen kommen alle bekannten thermischen Verfahren in Frage, dazu zählen Heißverformungsverfahren. Insbesondere kommt die Einführung des Kopfes des Borstenschaftrohlings in ein erhitztes Formelement in Betracht, welches dem Rohling die Kopfform aufprägt. Alternativ sind kontaktfreie thermische Verfahren denkbar, in denen unter dem Einfluß von Kohäsionskräften oder der Schwerkraft der (zumindest im Kopfbereich erhitzte) Borstenschaftrohling eine runde Form annimmt. Eine solche runde Form führt ebenfalls zu schonenderen Borsten, weil die Auftrefffläche der Borsten größer ist und das Auftreffprofil frei von Kanten ist.

Das Verfahren kann also vorteilhaft dazu eingesetzt werden, mindestens eine Borste herzustellen, die einen Borstenfuss, einen Borstenschaft und einen Borstenkopf jeweils unterschiedlichen Profils umfasst, und bei der der Borstenfuss einen Hinterschnitt aufweist, der Borstenschaft gratfrei ist und der Borstenkopf verrundet ist.

Es kommt auch in Betracht in einem weiteren Verfahrensschritt die Borsten am Borstenkopf mit einem Hüllmaterial zu versehen. Insbesondere kommt es in Betracht die Borstenköpfe mit Lack zu versehen, etwa in Form von kleinen Lacktröpfchen, die eine Verdickung und Verrundung des Borstenkopfes bewirken.

Solche lackierten Borstenenden sind bekannt. Sie führen aber bei längerem Gebrauch einer Borsten und Bürste regelmäßig zu dem Problem, daß das Hüllmaterial von der Borste abfällt. Deshalb wird ein Verfahrensschritt vorgeschlagen, in dem der Borstenkopf vor Aufbringen des Hüllmaterials verformt wird. Hierzu kommt die oben beschriebene Verrundung in Betracht. Es kommt aber auch eine andere Verbreiterung des Borstenprofils am Borstenkopf in Betracht, die die bessere Verankerung des Hüllmaterials ermöglicht. Beispielsweise kann das Borstenende tellerförmig gestaltet werden (T-Querschnitt der Borste).

Das Verfahren zur Herstellung von Borsten kann Teil eines Herstellungsverfahrens für Bürsten sein. In Betracht kommt ein Verfahren zur Herstellung einer Bürste, bei dem Borsten in einem Verfahren nach einem der vorhergehenden Ansprüche herstellt werden, und diese Borsten mit ihrem Borstenfuss in eine Borstenträgerkissen eingesetzt werden und das Borstenträgerkissen in eine Bürste eingesetzt wird

Eine Haarbürste, die nach einem der hier beschriebenen Verfahren hergestellt wurde, kann auch zusätzliche Haarbehandlungsvorrichtungen umfassen. Insbesondere kommt es in Betracht, daß die Haarbürste zusätzlich einen Ionenapplikator umfasst. Ein solcher lonenapplikator kann der statischen Aufladung des Haares entgegenwirken. Haar lädt sich typischerweise positiv auf, so daß die Aufbringung negativer Ionen auf das Haar hilfreich ist. Ein solcher Ionenapplikator kann netzbetrieben oder batteriebetrieben sein. Für eine besonders schonende und handliche Haarbürste wird ein batteriebetriebener Applikator für negative Ionen erwogen.

Die Erfindung wird nachfolgend anhand bevorzugter Ausführungsbeispiele und zugehöriger Zeichnungen näher erläutert. In den Zeichnungen zeigen:
- Fig. 1:: Einen Längsschnitt durch die Formwerkzeuge entlang der Längsmittelachse einer Borste.
- Fig. 2:: Einen Längsschnitt durch eine erfindungsgemäße Borste.
- Fig. 3:: Einen Längsschnitt durch eine andere erfindungsgemäße Borste die eine Borstenkopfumhüllung aufweist.
- Fig. 4:: Einen Querschnitt durch eine Bürste.

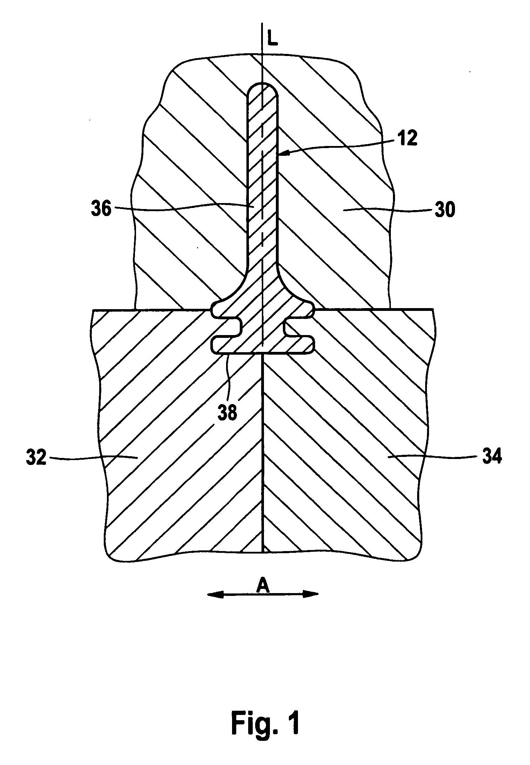

Fig. 1 zeigt im Längsschnitt eine Borste (10). Der Längsschnitt ist entlang der Längsachse (L) der Borste gewählt. Sichtbar ist der Borstenschaftrohling (12) der einen Borstenschaft (14) und einen Borstenfuß (16) sowie einen Borstenkopf (18) aufweist. Der Borstenschaftrohling entsteht in einem Formhohlraum (36) einer ersten Formbacke (30). Die zweite Formbacke (32) und die dritte Formbacke (34) bilden einen Formhohlraum (38), in dem der Borstenfuß (16) geformt wird. Zur Entnahme des Borstenschaftrohlings aus den Formbacken kann die erste Formbacke (30) in Richtung der Längsachse (L) bewegt werden, also auf der Fig. 1 nach oben. Die zweite und dritte Formbacke wird danach in axialer Richtung zur Längsachse (L) auseinander bewegt, wie dies durch den Doppelpfeil (A) angedeutet ist.

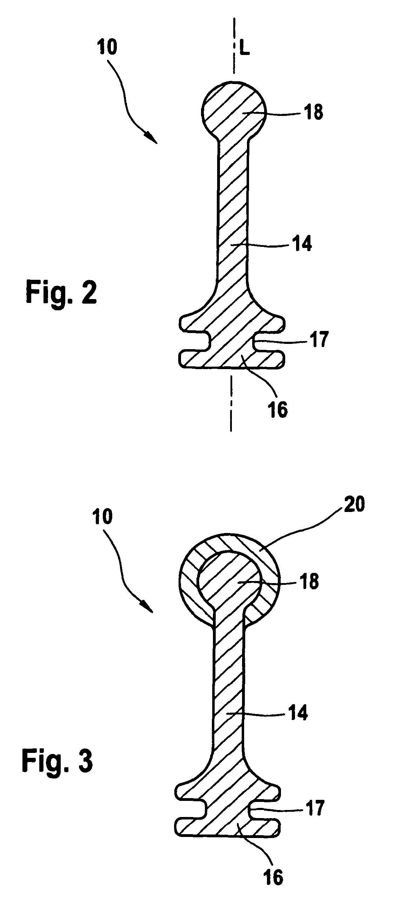

Fig. 2 zeigt eine Borste (10), die nach dem hier offenbarten Verfahren hergestellt werden kann. Die Borste (10) hat einen gratfreien Borstenschaft (14) der nach oben durch einen Borstenkopf (18) und nach unten durch den Borstenfuß (16) begrenzt wird. Zwischen Borstenfuß (16) und Borstenkopf (18) verjüngt sich der Borstenschaft (14) zum Borstenkopf (18) hin. Der Borstenfuß (16) weist einen Hinterschnitt (17) auf. Mit diesem Hinterschnitt kann die Borste (10) in einem Borstenträger verankert werden. Der Borstenkopf (18) ist verrundet, so daß der Borstenkopf (18) Querschnittsflächen hat die vom Borstenschaft zum Ende der Borste hin zunächst zunehmen und dann wieder abnehmen. Der Borstenkopf ist dabei im Wesentlichen axialsymmetrisch zur Längsachse (L) der Borste ausgebildet.

Fig. 3 zeigt eine andere Borste. In ihrer Form entspricht sie im Wesentlichen der Borste der Fig. 2. Jedoch ist am Borstenkopf (18) zusätzlich ein Umhüllungsmaterial (20) aufgebracht. Die Verrundung des Borstenkopfes (18) führt zu einer Verdickung des Kopfes gegenüber dem Borstenschaft (14), die den sicheren Halt des Umhüllungsmaterials gewährt.

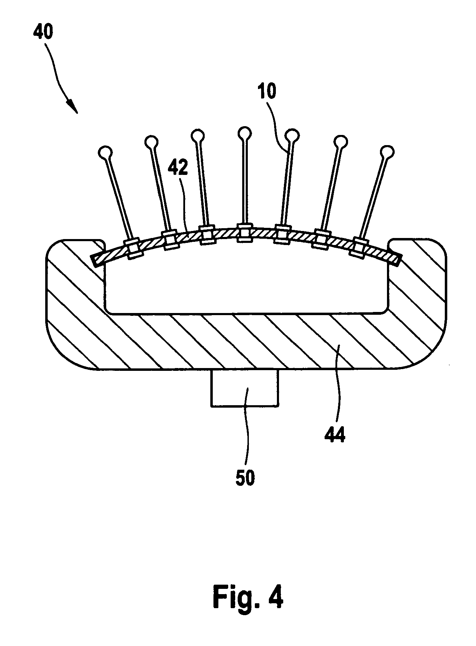

Fig. 4 zeigt einen Querschnitt durch eine Bürste, welcher durch das Borstenfeld der Bürste (40) geht. Man erkennt in diesem Querschnitt den Borstenträger (42) und den Bürstenkörper (44), in den der Borstenträger (42) eingelassen ist. Der Borstenträger (42) kann federnd vorgespannt eingelassen werden, so daß die im Borstenträger (42) enthaltenen Borsten (10) federelastisch gegenüber dem Borstenkörper (44) gelagert sind. Die Borsten (10) können sich entlang ihrer respektiven Längsachsen auf den Bürstenkörper (44) zu bewegen und wieder federnd in Richtung etwa der Haare zurück bewegen. Sie können sich ferner in axialer Richtung bewegen.

Die gezeigte Bürste (40) ist zusätzlich mit einem Ionenapplikator versehen. Der lonenapplikator ist an der Rückseite des Bürstenkörpers angebracht, also an der Seite die vom Borstenträger (42) abgewandt ist.

## Patentansprüche

1. Verfahren zur Herstellung einer Borste (10) zur Verwendung in einer Haarbürste (40), bei dem formbares Material in ein mehrteiliges trennbares Formwerkzeug eingebracht wird und eine Borste (10) mit einem Borstenfuß (16) und einem Borstenschaft (14) erzeugt wird,
wobei ein Borstenschaftrohling (12) mit einer ersten Formbacke (30) geformt wird, wobei formbares Material in einem Formhohlraum (36) der ersten Formbacke (30) eingebracht wird und anschließend dem Formhohlraum (36) der ersten Formbacke (30) entnommen wird, wobei der Formhohlraum (36) der ersten Formbacke (30) erhalten bleibt,
**dadurch gekennzeichnet, dass**
der Borstenfuß (16) in einer zweiten Formbacke (32) und einer dritten Formbacke (34) geformt wird, wobei die zweite und dritte Formbacke gemeinsam einen zweiten Formhohlraum (38) bilden, dessen Form im wesentlichen der Form des zu formenden Borstenfußes (16) entspricht, und der zweite Formhohlraum (38) mit dem formbaren Material gefüllt wird und anschließend die zweite und die dritte Formbacke getrennt werden.

2. Ein Verfahren nach Anspruch 1, bei dem aus dem Borstenschaftrohling (12) ein Borstenschaft (14) anderer Form entsteht, indem der Borstenschaft (14) zumindest teilweise durch Recken des Borstenschaftrohlings (12) geformt wird, wobei das Recken durch eine Relativbewegung der ersten Formbacke (30) zu der zweiten und/oder dritten Formbacke erfolgt und diese Relativbewegung entlang der Richtung der Längsachse (L) des zu erzeugenden Borstenschaftes erfolgt.

3. Ein Verfahren nach Anspruch 1, bei dem der Borstenschaft (14) im Wesentlichen dieselbe Form wie der Borstenschaftrohling (12) hat.

4. Ein Verfahren nach einem der vorhergehenden Ansprüche, bei dem das Profil des Borstenschaftrohlings (12) weiter bearbeitet wird.

5. Ein Verfahren nach Anspruch 4, bei dem das Profil des Borstenschaftrohlings (12) im Bereich des Kopfes des Borstenschaftrohlings bearbeitet wird.

6. Ein Verfahren nach Anspruch 5, bei dem das Profil des Borstenschaftrohlings im Bereich des Kopfes verrundet wird.

7. Ein Verfahren nach den Ansprüchen 4, 5, oder 6, in dem das Profil thermisch weiterbearbeitet wird.

8. Ein Verfahren nach Anspruch 7, in dem das Profil heiß verformt wird.

9. Ein Verfahren nach Anspruch 8, in dem das Profil kontaktfrei heiß verformt wird.

10. Ein Verfahren zur Herstellung einer Bürste (40), bei dem Borsten (10) in einem Verfahren nach einem der vorhergehenden Ansprüche herstellt werden, und diese Borsten (10) mit ihrem Borstenfuss (16) in einen Borstenträger (42) eingesetzt werden und der Borstenträger (42) in einen Bürstenkörper (44) eingesetzt wird.

## Claims

1. Method of manufacturing a bristle (10) for use in a hairbrush (40), wherein moldable material is introduced into a multi-part, separable mold tool to produce a bristle (10) with a bristle foot (16) and a bristle shaft (14), wherein a bristle shaft molded piece (12) is molded with a first molding piece (30), wherein moldable material is introduced into a mold cavity (36) of the first molding piece (30) and then removed from the mold cavity (36) of the first molding piece (30), wherein the mold cavity (36) of the first molding piece (30) remains;**characterized in that**
the bristle foot (16) is formed in a second molding piece (32) and a third molding piece (34), wherein the second and third molding pieces together define a second mold cavity (38), the shape of which principally corresponds to the shape of the bristle foot (16) to be produced, and the second mold cavity (38) is filled with the moldable material and the second and third molding piece are subsequently separated.

2. Method according to Claim 1, wherein the shape of the bristle shaft (14) formed from the bristle shaft molded piece (12) is different in that the bristle shaft (14) is formed at least in part from stretching the bristle shaft molded piece (12), wherein stretching is accomplished by moving the first molding piece (30) relative to the second and/or third molding piece and this relative motion is performed along the direction of the longitudinal axis (L) of the bristle shaft to be produced.

3. Method according to Claim 1, wherein the shape of the bristle shaft (14) is essentially the same as that of the bristle shaft molded piece (12).

4. Method according to one of the preceding claims, wherein the profile of the bristle shaft molded piece (12) undergoes additional processing.

5. Method according to Claim 4, wherein the profile of the bristle shaft molded piece (12) is processed in the head area of the bristle shaft molded piece .

6. Method according to Claim 5, wherein the profile of the bristle shaft molded piece is rounded in the head area.

7. Method according to claim 4, 5 or 6, wherein the profile is subjected to further thermal processing.

8. Method according to claim 7, wherein the profile is subjected to a hot deformation procedure.

9. Method according to claim 8, wherein the profile is subjected to a non-contact hot deformation procedure.

10. A Method of manufacturing a brush (40) wherein the bristles (10) are manufactured according to one of the preceding claims, and these bristles (10) are inserted via the bristle foot (16) into a bristle support (42), and the bristle support (42) in turn is installed in a brush body (44).

## Revendications

1. Procédé de fabrication d'une soie (10) à utiliser dans une brosse à cheveux (40), dans
laquelle un matériau moulable est introduit dans un moule de formage séparable en plusieurs parties et une soie (10) est produite avec une base de soie (16) et un manche de soie (14),
dans lequel une ébauche de manche de soie (12) est formée avec un premier coin de moule (30), dans lequel un matériau moulable est introduit dans une cavité de moule (36) du premier coin de moule (30) et, ensuite, la cavité de moule (36) est retirée du premier coin de moule (30), la cavité de moule (36) du premier coin de moule (30) étant conservée,
**caractérisé en ce que**
la base de soie (16) est formée dans un deuxième coin de moule (32) et un troisième coin de moule (34), dans lequel les deuxième et troisième coins de moule forment ensemble une deuxième cavité de moule (38), dont la forme correspond essentiellement à la forme de la base de soie (16) à former et la deuxième cavité de moule (38) est remplie d'un matériau moulable et, ensuite, les deuxième et troisième coins de moule sont séparés.

2. Un procédé selon la revendication 1, dans lequel, à partir de l'ébauche de manche de soie (12), un manche de soie (14) d'une autre forme est produit, en ce que le manche de soie (14) est formé au moins en partie par étirage de l'ébauche de manche de soie (12), dans lequel l'étirage est réalisé par un mouvement relatif du premier coin de moule (30) par rapport au deuxième et/ou au troisième coin de moule et dans lequel ce mouvement relatif est effectué le long de la direction de l'axe longitudinal (L) du manche de soie à fabriquer.

3. Un procédé selon la revendication 1, dans lequel le manche de soie (14) a essentiellement la même forme que l'ébauche de manche de soie (12).

4. Un procédé selon l'une des revendications précédentes, dans lequel le profil de l'ébauche de manche de soie (12) fait l'objet d'un traitement ultérieur.

5. Un procédé selon la revendication 4, dans lequel le profil de l'ébauche de manche de soie (12) est traité dans la zone de la tête de l'ébauche de manche de soie.

6. Un procédé selon la revendication 5, dans lequel le profil de l'ébauche de manche de soie est arrondi dans la zone de la tête.

7. Un procédé selon les revendications 4, 5 ou 6, dans lequel le profil est traité ultérieurement par voie thermique.

8. Un procédé selon la revendication 7, dans lequel le profil est déformé à chaud.

9. Un procédé selon la revendication 8, dans lequel le profil est déformé à chaud sans contact.

10. Un procédé de fabrication d'une brosse (40), dans lequel des soies (10) sont fabriquées selon un procédé selon une des revendications précédentes et ces soies (10) sont utilisées avec leur base de soie (16) dans un support de soies (42) et le support de soies (42) est utilisé dans un corps de brosse (44).
